# EUROPÄISCHE PATENTSCHRIFT

(11) **EP 1 917 720 B1**
(45) Veröffentlichungstag und Bekanntmachung des Hinweises auf die Patenterteilung: **19.01.2011**
(21) Anmeldenummer: 06762596.2
(22) Anmeldetag: 14.07.2006
(51) Int. Cl.: H04B 1/04

(54) **SCHALTUNGSANORDNUNG FÜR EINEN FUNKSENDER MIT LEDIGLICH EINEM OSZILLATOR UND VERFAHREN ZUR TAKTVERSORGUNG EINER SENDEEINHEIT**
CIRCUIT ARRANGEMENT FOR A RADIO TRANSMITTER WITH ONLY ONE OSCILLATOR AND METHOD FOR CLOCK SUPPLY TO A TRANSMITTER UNIT
MONTAGE POUR EMETTEUR RADIO COMPRENANT UNIQUEMENT UN OSCILLATEUR, ET PROCEDE POUR APPORTER UN SIGNAL D'HORLOGE A UNE UNITE D'EMISSION

(30) Priorität: 15.08.2005 DE 102005038712
(43) Veröffentlichungstag der Anmeldung: 07.05.2008
(73) Patentinhaber: Johnson Controls GmbH, 51399 Burscheid (DE)
(72) Erfinder: LOEPENHAUS, Bernd, 48565 Steinfurt (DE); PORTET, Vincent, F-95450 Vigny (FR)
(74) Vertreter: Schwöbel, Karl T.
(86) Internationale Anmeldenummer: PCT/EP2006/006916
(87) Internationale Veröffentlichungsnummer: WO 2007/019922

(56) Entgegenhaltungen:
- DE-A1- 19 508 276
- US-A- 5 755 230
- US-B1- 6 564 039
- KIRANAS A ET AL: "Design issues towards the integration of passive components in silicon RF VCOs" ELECTRONICS, CIRCUITS AND SYSTEMS, 1998 IEEE INTERNATIONAL CONFERENCE ON LISBOA, PORTUGAL 7-10 SEPT. 1998, PISCATAWAY, NJ, USA,IEEE, US, vol. 2, 7 September 1998 (1998-09-07), pages 311-314, XP010366239 ISBN: 978-0-7803-5008-3

## Beschreibung

Die vorliegende Erfindung betrifft ein Verfahren gemäß Anspruch 1 zur Taktversorgung einer Sendeeinheit mit einer Schaltanordnung.

Es sind generell Schaltungsanordnungen für Funksender, insbesondere Fernbedienungsvorrichtungen, bekannt. Beispielsweise ist aus der DE 195 08 276 A1 eine lernfähige Sende-Empfangseinrichtung bekannt, welche einen Eingangsschaltkreis, einen Ausgangsschaltkreis und einen Controller umfasst. Eine solche Fernbedienungsvorrichtung ist in der Lage, automatisch Aktuierungssignale zu lernen und Steuersignale, insbesondere an einen Garagentorantrieb zu senden. Weiterhin ist es bekannt, solche universell Fernbedienungsvorrichtungen vorzusehen, die insbesondere fest in einem Fahrzeug eingebaut sind und mit verschiedenen femzubedienenden Einrichtungen, insbesondere verschiedenen Garagentorantrieben von unterschiedlichen Herstellern und mit unterschiedlichen Aktuierungssignalen, zusammenzuarbeiten in der Lage sind. Nachteilig ist bei bekannten Systemen, dass ein hoher Aufwand betrieben werden muss, um zur Definition des richtigen Aktuierungssignals, beispielsweise für den Garagentorantrieb, zu gelangen, d. h. um eine Konfiguration der Fernbedienungsvorrichtung durchzuführen. Hierbei sind im Stand der Technik bereits Sendeempfänger vorgesehen, welche ein Öffnungssignal, welches von der mit dem Garagentorantrieb mitgelieferten Fernsteuereinheit ausgesandt wird, empfängt, analysiert und hieraus zu dem richtigen Öffnungssignal für den Garagentorantrieb gelangt. Aus der oben zitierten DE-Schrift ist es weiterhin bekannt, dass die Fernbedienungseinrichtung einen Mikrocontroller aufweist, welcher mit einer einen PLL-Schaltkreis aufweisenden Sendeeinheit verbunden ist. Hierbei ist der PLL-Schaltkreis durch einen Oszillator angetrieben bzw. getaktet. Es ist hierbei nachteilig, dass sowohl für die Sendeeinheit als auch für den Mikrocontroller ein Taktgeber in Form eines Oszillators erforderlich ist, so dass zwingend eine Mehrzahl von Taktgebern bzw. Oszillatoren in dem Schaltkreis vorhanden ist, was diesen vergleichsweise kostenträchtig, groß und schwer macht. Weiterhin wird durch das Vorhandensein einer Mehrzahl von Oszillatoren, d. h. insbesondere eines Taktgebers speziell, lediglich für die Sendeeinheit der Fernbedienungsvorrichtung, eine weitere Störquelle in die Einheit mit eingebunden, was zu nachteiligen Konsequenzen für die elektromagnetische Verträglichkeit der Schaltungsanordnung führt.

Weiterhin ist aus der Druckschrift US 6 564 039 A1 ein Frequenzerzeugungsschaltkreis bekannt.

Der Erfindung liegt daher die Aufgabe zugrunde, ein Verfahren zur Taktversorgung einer Sendeeinheit für einen Funksender in einem Kraftfahrzeug, insbesondere für eine Femsteuerungsvorrichtung, zu schaffen, bei der die Nachteile des Standes der Technik vermieden werden.

Diese Aufgabe wird erfindungsgemäß durch ein Verfahren gemäß Anspruch 1 gelöst. Erfindungsgemäß ist es vorgesehen, dass der Taktgeber einen Eingangsanschluss zum Empfang eines Taktsteuersignals von der Steuerungseinheit aufweist bzw. dass der Taktgeber zum Empfang eines Taktsteuersignals von der Steuereinheit vorgesehen ist. Hierdurch ist es möglich, dass die Steuerungseinheit - zumindest in gewissen Grenzen - einen Einfluss auf die Frequenz des ihr von dem Taktgeber zugeführten ersten Taktsignals ausüben kann. Gemäß der Erfindung wird zur FSK-Modulation eines von der Sendeeinheit ausgesandten Signals das erste Taktsignal zwischen zwei Frequenzen umgeschaltet. Hierdurch ist es möglich, dass selbst eine vergleichsweise große Frequenzabweichung, wie sie bei FSK-modulierten Signalen auftritt, zur Taktversorgung der Steuerungseinheit verwendet werden kann und somit ein separater Taktgeber jeweils für die Steuerungseinheit und für die Sendeeinheit vermieden wird. Daher ist es erfindungsgemäß und für einen Fachmann in überraschender Weise möglich, einen separaten Taktgeber für die Sendeeinheit einzusparen, d. h. den Taktgeber sowohl für die Steuerungseinheit als auch für die Sendeeinheit zu verwenden. Die erfindungsgemäße Schaltungsanordnung für einen Funksender und damit die Fernbedienungsvorrichtung für ein Fahrzeug kann somit kleiner, leichter und kostengünstiger hergestellt werden.

Es ist erfindungsgemäß bevorzugt, dass das erste Taktsignal von der Steuerungseinheit im Wesentlichen unverändert als zweites Taktsignal an die Sendeeinheit weitergegeben wird. Insbesondere wird hierbei vermieden, Bearbeitungskapazitäten der Steuerungseinheit für die Veränderung, beispielsweise Frequenzstabilisierung, des zweiten Taktsignals zu verwenden. Es kann jedoch auch mit einfachen Mitteln - beispielsweise einer Frequenzdivision - vorgesehen sein, dass das zweite Signal sich frequenzmäßig vom ersten Signal unterscheidet.

Erfindungsgemäß ist besonders bevorzugt, dass die Frequenz des zweiten Taktsignals proportional zu der Frequenz des ersten Taktsignals ist. Dies hat ebenfalls den Vorteil, dass die Steuerungseinheit, insbesondere ein Mikrocontroller, keinerlei wesentliche Bearbeitung des Taktsignals vornehmen muss - etwa eine Frequenzstabilisierung oder dergleichen - sondern, dass das erste Taktsignal mehr oder weniger unverändert - höchstens etwa frequenzvervielfacht bzw. frequenzuntersetzt - als zweites Taktsignal an die Sendeeinheit weitergegeben wird, wobei jedoch die Form des zweiten Taktsignals - also etwa die Flankensteilheit oder dergleichen - von der Steuerungseinheit durchaus geändert werden kann. Etwa kann das zweite Taktsignal als ein Rechtecksignals vorliegen.

Bevorzugt ist ferner, dass die Sendeeinheit eine Sendeempfangseinheit ist, dass die Steuerungseinheit als ein Mikrocontroller ausgebildet ist und dass der Taktgeber einen Oszillator, insbesondere einen Quarzoszillator, umfasst. Hierdurch ist es erfindungsgemäß in besonders einfacher und kostengünstiger Weise möglich, die erfindungsgemäße Schaltungsanordnung auszubilden.

Ferner ist bevorzugt, dass der Taktgeber wenigstens eine Varaktordiode aufweist. Hierdurch ist es mit einfachen Mitteln möglich, eine Frequenzänderung des Taktgebers durch eine unterschiedliche Ansteuerung der Varaktordiode vorzunehmen. Besonders bevorzugt ist die Verwendung von zwei Varaktordioden, was den Vorteil hat, dass das Signal (drive level) am Oszillatoreingang vergleichsweise klein gehalten werden kann.

Ein weiterer Gegenstand der vorliegenden Erfindung ist eine Fernbedienungsvorrichtung mit einer Schaltungsanordnung. Die Fernbedienungsvorrichtung ist erfindungsgemäß fest in ein Fahrzeug eingebaut und in der Lage, über die Sendeeinheit Aktuierungssignale abzusetzen, die fernzusteuernde Vorrichtungen, insbesondere Garagentore oder dergleichen, steuern.

Die Erfindung wird nachfolgend anhand von in der Zeichnung dargestellten Ausführungsbeispielen näher erläutert.
- **Figur 1**: zeigt schematisch eine Anwendung des erfindungsgemäßen Verfahrens bzw. einer erfindungsgemäßen Fernbedienungsvorrichtung am Beispiel eines Garagentorantriebs.
- **Figur 2**: zeigt ein schematisches Blockschaltbild der Fernbedienungsvorrichtung.
- **Figur 3**: zeigt einen Ausschnitt der Schaltung der Fernbedienungsvorrichtung mit einem Taktgeber, mit einer Steuerungseinheit und mit einer Sendeeinheit.
- **Figur 4**: zeigt eine Prinzipdarstellung eines Digitalanalogwandlers.

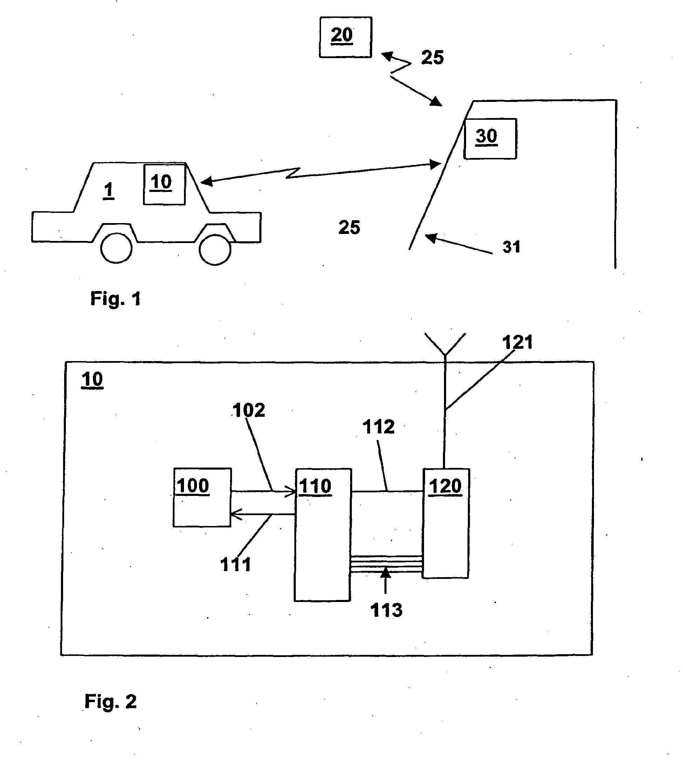

In **Figur 1** ist schematisch eine grundsätzliche Anordnung zur Anwendung deserfindungsgemäßen Verfahrens bzw. der erfindungsgemäßen Fernbedienungsvorrichtung 10 dargestellt. Die Fernbedienungsvorrichtung 10 weist eine Schaltungsanordnung, insbesondere in einem Gehäuse oder dergleichen auf. Die Schaltungsanordnung kann hierzu beispielsweise auf einer Platine oder einer sonstigen Leiterplattenvorrichtung oder dergleichen angeordnet sein bzw. hierauf realisiert sein. Hierbei ist es möglich, dass die Schaltungsanordnung sowohl mittels mehrerer diskreter Bauelemente realisiert ist, welche ihrerseits als integrierte Bauelemente, beispielsweise eine Steuerungseinheit, vorgesehen sein können. Die Fernbedienungsvorrichtung 10, welche im folgenden auch als universelle Fernbedienungsvorrichtung 10 bezeichnet wird, dient im in der **Figur 1** dargestellten Beispiel zur Steuerung eines Motors 30 eines Garagentors 31, wobei der Motor 30 über einen nicht dargestellten Empfänger verfügt, welcher mit der Fernbedienungsvorrichtung 10 über insbesondere eine Funkschnittstelle, d. h. mittels elektromagnetischer Wellen, zu kommunizieren in der Lage ist. Die Funkschnittstelle ist in Figur 1 mit dem Bezugszeichen 25 bezeichnet. Serienmäßig wird dem Garagentorantrieb 30 in der Regel eine Femsteuereinheit 20 mitgeliefert, welche in der Lage ist, ein Signal zu generieren und auszusenden, welches den Motor 30 aus-und einschaltet bzw. gegebenenfalls noch weitere Funktionen am Garagentorantrieb 30 steuern kann. Der Motor 30 bzw. der Garagentorantrieb 30 wird im folgenden stellvertretend für eine Vielzahl möglicher fernzusteuernder Einrichtungen 30 beschrieben. Erfindungsgemäß ist es jedoch selbstverständlich möglich, sämtliche solche Einrichtungen 30, beispielsweise eine Hausbeleuchtung oder eine Schrankenzufahrt oder eine Tiefgaragenöffnung oder sonstige fernsteuerbare Einheiten, insbesondere im Eigenheimbereich, mittels der erfindungsgemäßen Fernbedienungsvorrichtung 10 fernzusteuern.

Die erfindungsgemäße Fernbedienungsvorrichtung 10 soll die Femsteuereinheit 20 ersetzen. Die Fernbedienungsvorrichtung 10 ist insbesondere in ein Fahrzeug 1 fest eingebaut, so dass, beispielsweise an der Decke oder im Mittelkonsolenbereich des Fahrzeugs 1, eine einfache Bedienung der Fernbedienungsvorrichtung 10 zur Betätigung des Garagentors 31 möglich ist. Die von der Fernbedienungsvorrichtung 10 bzw. der Fernsteuereinheit an den Garagentorantrieb 30 ausgesandten Signale sind in **Figur 1** mit dem Bezugszeichen 25 bezeichnet.

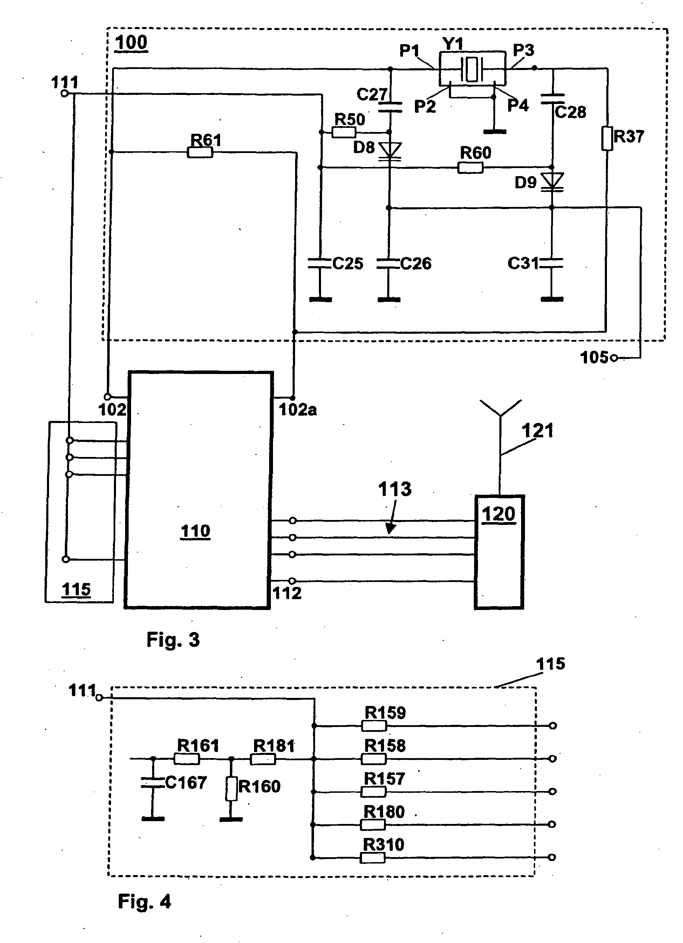

In **Figur 2** ist schematisch die Darstellung eines Blockschaltbildes der Fernbedienungsvorrichtung 10 abgebildet. Die Fernbedienungsvorrichtung 10 weist eine Schaltungsanordnung auf. Die Schaltungsanordnung weist erfindungsgemäßeinen Taktgeber 100, eine Steuerungseinheit 110 und eine Sendeeinheit 120 auf. Die Sendeeinheit 120 weist eine Antenne 121 auf. Die Sendeeinheit 120 kann erfindungsgemäß auch als Sende-Empfangseinheit 120 ausgebildet sein. In diesem Fall kann die Antenne 121 auch als Empfangsantenne für die Sende-Empfangseinheit 120 dienen. Anstelle der Antenne 121 kann die Fembedlenungsvorrlchtung 10 auch eine Mehrzahl von Antennen aufweisen, etwa für unterschiedliche Frequenzen oder für unterschiedliche Betriebsarten, wie etwa Sendebetrieb, Empfangsbetrieb oder dergleichen. Im Folgenden wird jedoch im wesentlichen nur die Ausbildung mit einer Sendeeinheit 120 beschrieben. Die Steuerungseinheit 110 ist insbesondere als Mikrocontroller, d. h. als eine integrierte Schaltung, vorgesehen. Der Taktgeber 100 ist als eine insbesondere aus diskreten Bauelementen aufgebaute Schaltung vorgesehen, wobei der Taktgeber 100 auch als eine - entweder von der Steuerungseinheit 110 separat vorgesehene oder in die Steuerungseinheit 110 integriert vorgesehene - integrierte Schaltung vorgesehen sein kann. Der Einfachheit halber sind für einen Fachmann geläufige selbstverständliche Schaltungsteile, wie beispielsweise Spannungsversorgungen oder dergleichen, in der **Figur 2** und im Wesentlichen auch in der **Figur 3** weggelassen.

In **Figur 2** wird mittels eines ersten Taktsignals 102 der Steuerungseinheit 110 seitens des Taktgebers 100 ein Taktsignal zur Verfügung gestellt, welche die Steuerungseinheit 110 in der Regel zur Koordinierung ihrer Arbeitsabläufe benötigt. Das erste Taktsignal 102 ist hierbei erfindungsgemäß insbesondere variabel, d. h. frequenzvariabel, vorgesehen. Erfindungsgemäß existiert daher ein bestimmter Frequenzbereich, in welchem die Frequenz des ersten Taktsignals 102, welches vom Taktgeber 100 generiert wird, vorliegen kann. Innerhalb des möglichen Frequenzbereiches, welcher auch aus mehreren voneinander getrennten Frequenzbereichen bzw. aus mehreren diskreten Frequenzwerten bestehen kann, ist es mittels eines Taktsteuersignals 111 möglich, eine bestimmte Frequenz des ersten Taktsignals 102 auszuwählen. Das Taktsteuersignal 111 wird hierbei von der Steuerungseinheit 110 dem Taktgeber 100 zu Verfügung gestellt. Die Steuerungseinheit 110 leitet ein zweites Taktsignal 112 an die Sendeeinheit 120 weiter. Mittels des zweiten Taktsignals produziert die Sendeeinheit 120 ein von der Antenne 121 auszusendendes Signal. Das zweite Taktsignal 112 dient hierbei als Grundlage für das von der Sendeeinheit 120 produzierte auszusendende Signal, jedoch wird das auszusendende Signal von der Sendeeinheit 120, welche insbesondere als sogenannter PLL-Schaltkreis vorgesehen ist, in mehrfacher Weise modifiziert, was mittels insbesondere einer Mehrzahl von Steuerleitungen 113 zwischen der Steuerungseinheit 110 und der Sendeeinheit 120 beeinflusst bzw. gesteuert wird.

In **Figur 3** ist eine Schaltungsanordnung dargestellt, welche in einer Fernbedienungsvorrichtung 10 Verwendung findet. Erkennbar ist neben dem mit einer gestrichelten Linie eingerahmten Schaltungsbereich, welcher dem Taktgeber 100 entspricht, die Steuerungseinheit 110 und die Sendeeinheit 120. Die Steuerungseinheit 110 und die Sendeeinheit 120 sind hierbei insbesondere als integrierte Schaltkreise bzw. integrierte Bauelemente ausgebildet. Erkennbar sind weiterhin die Leitungen für das Taktsteuersignal 111, für das erste Taktsignal 102, für das zweite Taktsignal 112 und die weiteren Steuerleitungen 113.

Im Folgenden wird der Aufbau der Schaltung des Taktgebers 100 näher erläutert. Als Kernelement weist der Taktgeber 100 einen Oszillator Y1 sowie wenigstens eine Varaktordiode auf. Im Beispiel des in **Figur 3** dargestellten Schaltungsaufbaus umfasst der Taktgeber 100 zwei Varaktordioden, nämlich eine erste Varaktordiode D8 und eine zweite Varaktordiode D9. Mittels der Varaktordioden D8, D9, welche als veränderliche Kapazitäten verwendet werden, ist es möglich, die Resonanzfrequenz des Oszillators Y1 zu verändern und zwar mittels einer Veränderung der an den Varaktordioden D8, D9 anliegenden Spannung. Hierzu ist die erste Varaktordiode D8 (über eine Kapazität C27) an einen ersten Anschluss des Oszillators Y1 angeschlossen und es ist die zweite Varaktordiode D9 an einen dritten Anschluss des Oszillators Y1 (über eine Kapazität C28) angeschlossen. Der erste Anschluss des Oszillators Y1 ist mit der Bezeichnung P1 bezeichnet. Der dritte Anschluss des Oszillators Y1 ist mit der Bezeichnung P3 bezeichnet. Ein zweiter bzw. vierter Anschluss des Oszillators Y1 ist mit der Bezeichnung P2 bzw. P4 bezeichnet. Mittels des Taktsteuersignals 111, welches über einen Widerstand R50 zwischen der ersten Varaktordiode D8 und dem Kondensator C27 anliegt und welches über einen Widerstand R60 zwischen der zweiten Varaktordiode D9 und der Kapazität C28 anliegt, ist es möglich, den Kapazitätswert beider Varaktordioden D8, D9 zu ändern. Die Folge einer Änderung des Taktsteuersignals 111 (insbesondere eine veränderliche Gleichspannung), welches auch die Bezeichnung REFPULL trägt, ist, dass die Kapazitäten der Varaktordioden geändert werden und damit auch die (Resonanz-)Frequenz des Oszillators Y1. Der Oszillator Y1 ist insbesondere als Quarzoszillator vorgesehen, umfasst also einen Quarzkristall, der aufgrund seiner Abmessungen mit einer vorgegebenen Resonanzfrequenz bevorzugt schwingen kann. Die Änderung der Resonanzfrequenz des Oszillators Y1 durch die Veränderung der Kapazitäten der Varaktordioden D8, D9 hängt daher insbesondere von dem Spannungsniveau des Taktsteuersignals 111 ab. Falls die erfindungsgemäße Fernbedienungsvorrichtung 10 bzw. die Schaltungsanordnung zur Aussendung eines FSK-modulierten FM-Signals benutzt werden soll, wird das vom Taktgeber 100 ausgehende erste Taktsignal 102 (bzw. 102a) mittels einer Veränderung des Taktsteuersignals 111 im Takt der notwendigen Frequenzänderung zur Ereichung der vorgesehenen Signalmodulation verändert.

Der zweite und vierte Anschluss P2, P4 des Oszillators Y1 liegen an Masse. Das Taktsteuersignal 111 ist erfindungsgemäß insbesondere mittels eines Digitalanalogwandlers 115 zwischen der Steuerungseinheit 110 und dem Taktgeber 100 generiert. Ein solcher Digitalanalogwandler 115 kann erfindungsgemäß insbesondere mittels eines Widerstandsnetzwerkes realisiert sein, welches mehrere mittels verschiedener Ausgänge des Mikrocontrollers 110 bzw. der Steuerungseinheit 110 gesteuerte Spannungen erzeugen kann. Mittels der erfindungsgemäßen Weiterreichung bzw. Weiterleitung des ersten Taktsignals 102 entweder in zumindest frequenzmäßig weitgehend unveränderter Form oder in in konstanter Weise frequenzdividierter Form als zweites Taktsignal 112 an die Sendeeinheit 120 ist es erfindungsgemäß möglich, mittels des Taktsteuersignals 111 die der Sendeeinheit 120 zugeführten Taktgebersignale (zweites Taktsignal 112) einzustellen bzw. zu verändern. Eine solche veränderliche Taktrate ist für den ordnungsgemäßen Betrieb in der vorgesehenen Weise der Sendeeinheit 120 zwingend erforderlich. Überraschend hat sich jedoch herausgestellt, dass ein solches frequenzveränderliches Taktsignal zur Taktversorgung des Mikrocontrollers 110 bzw. der Steuereinheit 110 nicht schädlich ist. Im Gegenteil ist es für die erfindungsgemäße Schaltungsanordnung insofern vorteilhaft, als ohne einen zusätzlichen Taktgeber der allein für die Steuerungseinheit 110 zuständig wäre, auf die mit einem solchen Oszillator verbundenen Störquellen bzw. elektromagnetischen Unverträglichkeiten vermieden werden. Selbstverständlich werden darüber hinaus Kosten, Platz und Gewicht durch das Weglassen eines für die Steuerungseinheit 110 separaten Oszillators eingespart.

Erfindungsgemäß ist es insbesondere vorgesehen, dass die größere Frequenzänderung des Oszillators Y1 mittels der zweiten Varaktordiode D9 erfolgt. Durch die Verwendung von zwei Varaktordioden ist es möglich, ein zu großes Signal (drive level) am Eingang des Oszillators Y1 zu vermeiden.

Als Steuerungseinheit 110 ist erfindungsgemäß beispielhaft ein Mikrocontroller vorgesehen, beispielsweise der Mikrocontroller PIC18F6620. Als Sendeeinheit 120 ist erfindungsgemäß beispielhaft insbesondere der Transceiverbaustein Melexis TH7122 vorgesehen. Beide Bausteine nutzen erfindungsgemäß beispielhaft einen 24,576 MHz Quarz. Dieser Quarz ist als Oszillator Y1 an die am Mikrocontroller 110 vorgesehenen Anschlüsse (102, 102a) für einen Quarz bzw. für einen Taktgeber angeschlossen. Die Steuerungseinheit 110 bzw. der Mikrocontroller 110 nutzt diese Frequenz als Taktsignal (Clock-Signal) zur Abarbeitung seines internen abgelegten Programms. An einem weiteren Anschluss (PIN 33, Bezeichnung PWMRO) der Steuerungseinheit 110 liegt das zweite Taktsignal 112 an, welches als ein hochfrequentes Signal vorgesehen ist, welches aus dem 24,576 MHz des Oszillators Y1 generiert wird. Dieses Signal wird vom Transceiver 120 bzw. von der Sendeeinheit 120 als Referenzoszillatorsignal genutzt. Dies bedeutet, dass dieses zweite von der Steuerungseinheit 110 ausgehende Taktsignal 112 von der Sendeeinheit 120 als Taktsignal verwendet wird.

Erfindungsgemäß ist die Fernbedienungsvorrichtung 10 in mehreren Betriebszuständen bzw. Betriebsmodi einsatzfähig. Beispielsweise ist die Fernbedienungsvorrichtung 10 bzw. die erfindungsgemäße Schaltungsanordnung in einem sogenannten Trainingsmode (Trainingsmodus) einstellbar, bei dem ein von der Antenne 121 aufgenommenes Signal von der Fernbedienungsvorrichtung 10 aufgenommen und erkannt (gesampelt) wird. Weiterhin ist es möglich, dass die Fernbedienungsvorrichtung 10 in einem Transmitmode (Sendemodus) verwendet wird, bei dem die Sendeeinheit 120 ein zur Steuerung beispielsweise eines Garagentormotors 30 vorgesehenes Aktuierungssignal aussendet. Diese Sendeeinheit 120 bzw. die Sendeempfangseinheit 120 nutzt dann das zweite Taktsignal 112 unter anderem als Referenzsignal bei der Erzeugung der Sendefrequenzen in den zugelassenen Frequenzbändern (beispielsweise 27 MHz, 30 MHz, 40 MHz, 418 MHz, 433 MHz, 868 MHz bzw. 915 MHz). Um diese Frequenzen zu erzeugen wird das zweite Taktsignal 112 in der Sendeeinheit 120 (PLL-Schaltkreis) in bekannter Weise mit natürlichen Zahlen multipliziert bzw. durch diese dividiert und durch einen Regelkreis stabil gehalten. Auch während des Trainingsbetriebszustandes (Trainingsmodus) der Schaltungsanordnung bzw. der erfindungsgemäßen Fernbedienungsvorrichtung 10 wird das zweite Taktsignal 112 vom Mikrocontroller 110 als Referenzoszillatorsignal von der Sendeeinheit 120 benutzt. Es wird daher erfindungsgemäß kein für die Sendeeinheit 120 separates Taktsignal benötigt, welches einen weiteren Oszillator erforderlich machen würde. Zur Anpassung der Signalform des zweiten Taktsignals 112 an die "Bedürfnisse" der Sendeeinheit 120 kann es erfindungsgemäß vorgesehen sein, am Ausgang der Steuerungseinheit 110, welche dem zweiten Taktsignal 112 entspricht, eine Signalglättung vorzunehmen, beispielsweise mittels eines nicht dargestellten RC-Gliedes. Hierdurch wird die Flankensteilheit des vom Mikrocontroller 110 ausgehenden zweiten Taktsignals 112 etwas reduziert, so dass die elektromagnetische Verträglichkeit verbessert wird.

In **Figur 3** ist mittels des Bezugszeichens 105 ein Anschluss für eine Spannungsversorgung des Taktgebers 100 dargestellt, welcher an den den Widerständen R50 bzw. R60 gegenüberliegenden Anschlüssen der ersten und zweiten Varaktordiode D8, D9 angeschlossen ist. Weiterhin ist der Anschluss 105 mittels eines Kondensators C26 und mittels eines weiteren hierzu parallel geschalteten Kondensators C31 gegen Masse geschaltet. Der Anschluss des Taktsteuersignals 111 ist mittels eines weiteren Kondensators C25 gegen Masse geschaltet. Zwischen dem Anschluss des ersten Taktsignals 102 und einem weiteren Anschluss 102a zur Taktversorgung der Steuerungseinheit 110 ist ein weiterer Widerstand R61 geschaltet. Zwischen dem weiteren Anschluss 102a des ersten Taktsignals 102 und dem dritten Anschluss P3 des Oszillators Y1 kann ein weiterer Widerstand R37 geschaltet werden oder aber dieser Widerstand gebrückt werden.

Der Widerstand R61 weist beispielhaft einen Widerstandswert von 1 MΩ auf. Bei den Kapazitäten C25, C26 und C31 handelt es sich erfindungsgemäß insbesondere um 100 pF Kapazitäten, die gegen eine Spannung von 50 V durchschlagfest sind. Bei der Kapazität C27 handelt es sich insbesondere um eine 8,2 pF-fache Kapazität. Bei der Kapazität C28 handelt es sich insbesondere um einen 47 pF-Kondensator. Bei den Varaktordioden D8 und D9 handelt es sich insbesondere um Bauelemente BBY65.

Bei den Steuerleitungen 113 handelt es sich erfindungsgemäß um Steuerleitungen zur Verfügungsstellung der in der Sendeeinheit 120 zur Generierung der Sendefrequenz ausgehend von dem zweiten Taktsignal 112 verwendeten natürlichen Zahlen.

In **Figur 4** ist eine Prinzipdarstellung eines Digitalanalogwandlers 115 dargestellt, der in einer erfindungsgemäß bevorzugten Ausführung das Taktsteuersignal 111 generiert. Ein solcher Digitalanalogwandler 115 kann erfindungsgemäß insbesondere mittels eines Widerstandsnetzwerkes realisiert sein, wobei an einem Ausgang FSKDEV1 der Steuerungseinheit 110 insbesondere ein 3,9 kΩ Widerstand R159, wobei an einem Ausgang FSKDEV2 der Steuerungseinheit 110 insbesondere ein 1,5 kΩ Widerstand R158, wobei an einem Ausgang FSKDEV3 der Steuerungseinheit 110 insbesondere ein 2,2 kΩ Widerstand R157, wobei an einem Ausgang FSKDEV4 der Steuerungseinheit 110 insbesondere ein 1,0 kΩ Widerstand R180 und wobei an einem Ausgang Vccmicro der Steuerungseinheit 110 insbesondere ein 3,3 kΩ Widerstand R310 vorgesehen ist. Die jeweils anderen Anschlüsse der Widerstände R159, R158, R157, R180 und R310 sind jeweils parallel mit der Leitung des Taktsteuersignals 111 verbunden, so dass sich über die Anwesenheit bzw. Abwesenheit einer Betriebsspannung an den Ausgängen FSKDEV1, FSKDEV2, FSKDEV3, FSKDEV4 und Vccmicro der Steuereinheit 110 das Spannungsniveau des Taktsteuersignals 111 einstellen lässt. Ein Kondensator C167 (insbesondere 1 nF Kapazität) sowie drei Widerstände R161 (insbesondere 1 kΩ), R181 (insbesondere 18 kΩ) und R160 (insbesondere 560 Ω) dienen der Signaldämpfung und Tiefpassfilterung.

### Bezugszeichenliste

- 1: Fahrzeug
- 10: Fernbedienungsvorrichtung
- 20: Femsteuereinheit
- 25: Funkschnittstelle
- 30: fern zu steuernde Einheit / Motor / Garagentorantrieb
- 31: Garagentor
- 100: Taktgeber
- 102: erstes Taktsignal
- 102a: weiterer Anschluss
- 110: Steuerungseinheit
- 111: Taktsteuersignal
- 112: Zweites Taktsignal
- 113: Steuerleitung
- 120: Sendeeinheit / Sende-Empfangseinheit
- 121: Antenne
- 105: Spannungsversorgungsanschluss
- Y1: Oszillator
- P1, P2, P3, P4: Anschlüsse des Oszillators
- C25, C26, C27, C28, C31: Kondensatoren
- R37, R50, R60, R61: Widerstände
- D8, D9: erste bzw. zweite Varaktordiode

## Patentansprüche

1. Verfahren zur Taktversorgung einer Sendeeinheit (120) mit einer Schaltungsanordnung, insbesondere für eine Fernsteuerungsvorrichtung, wobei die Schaltungsanordnung eine Steuerungseinheit (110), eine Sendeeinheit (120) und einen Taktgeber (100) aufweist, wobei der Taktgeber (100) ein erstes Taktsignal (102) erzeugt, wobei zur Taktversorgung der Steuerungseinheit (110) das erste Taktsignal (102) an die Steuerungseinheit (110) weitergeleitet wird, wobei das erste Taktsignal (102) von der Steuerungseinheit (110) als zweites Taktsignal (112) an die Sendeeinheit (120) weitergegeben wird, wobei von der Steuerungseinheit (110) ein Taktsteuersignal (111) erzeugt wird, wobei das Taktsteuersignal (111) an den Taktgeber (100) weitergeleitet wird und **dadurch gekennzeichnet, dass** mittels des Taktsteuersignals (111) das erste Taktsignal (102) FSK-moduliert wird.

2. Verfahren nach Anspruch 1, **dadurch gekennzeichnet, dass** das zweite Taktsignal (112) gegenüber dem ersten Taktsignal (102) frequenzvervielfacht oder frequenzuntersetzt wird.

3. Verfahren nach einem der vorhergehenden Ansprüche, **dadurch gekennzeichnet, dass** die Sendeeinheit (120) als Sende-Empfangs-Einheit ausgebildet wird.

4. Verfahren nach einem der vorhergehenden Ansprüche, **dadurch gekennzeichnet, dass** die Steuerungseinheit (110) als Mikrocontroller ausgebildet wird.

5. Verfahren nach einem der vorhergehenden Ansprüche, **dadurch gekennzeichnet, dass** für den Taktgeber (100) ein Oszillator (Y1), insbesondere ein Quarz-Oszillator, verwendet wird.

6. Verfahren nach einem der vorhergehenden Ansprüche, **dadurch gekennzeichnet, dass** das Taktsteuersignal (111) von einem Digitalanalogumwandler (115) erzeugt wird.

7. Verfahren nach einem der vorhergehenden Ansprüche, **dadurch gekennzeichnet, dass** zur Frequenzmodulation des ersten Taktsignals (102) für den Taktgeber (100) wenigstens eine Varaktordiode (D8,D9) verwendet wird.

## Claims

1. Method for clock supply to a transmitter unit (120) containing a circuit arrangement, in particular for a remote control device, the circuit arrangement having a control unit (110), a transmitter unit (120) and a clock generator (100), the clock generator (100) generating a first clock signal (102), the first clock signal (102) being forwarded to the control unit (110) for the clock supply to the control unit (120), the first clock signal (102) being forwarded by the control unit (110) as a second clock signal (112) to the transmitter unit (120), a clock control signal (111) being generated by the control unit (110), the clock control signal (111) being forwarded to the clock generator (100) and **characterized in that** the first clock signal (102) is FSK modulated by means of the clock control signal (111).

2. Method according to Claim 1, **characterized in that** the second clock signal (112) is frequency multiplied or frequency divided compared to the first clock signal (102).

3. Method according to any of the previous claims, **characterized in that** the transmitter unit (120) is designed as a transceiver.

4. Method according to any of the previous claims, **characterized in that** the control unit (110) is designed as a microcontroller.

5. Method according to any of the previous claims, **characterized in that** an oscillator (Y1), in particular a crystal oscillator, is used for the clock generator (100).

6. Method according to any of the previous claims, **characterized in that** the clock control signal (111) is generated by a digital-to-analogue converter (115).

7. Method according to any of the previous claims, **characterized in that**, for the frequency modulation of the first clock signal (102), at least one varactor diode (D8, D9) is used for the clock generator (100).

## Revendications

1. Procédé de fourniture d'horloge à une unité d'émission (120) avec un arrangement de circuit, notamment pour un dispositif de commande à distance, l'arrangement de circuit présentant une unité de commande (110), une unité d'émission (120) et un générateur d'horloge (100), le générateur d'horloge (100) générant un premier signal d'horloge (102), le premier signal d'horloge (102) étant transmis à l'unité de commande (110) pour fournir l'horloge à l'unité de commande (110), le premier signal d'horloge (102) étant transmis par l'unité de commande (110) à l'unité d'émission (120) sous la forme d'un deuxième signal d'horloge (112), un signal de commande d'horloge (111) étant généré par l'unité de commande (110), le signal de commande d'horloge (111) étant transmis au générateur d'horloge (100) et **caractérisé en ce qu'**une modulation FSK est appliquée au premier signal d'horloge (102) au moyen du signal de commande d'horloge (111).

2. Procédé selon la revendication 1, **caractérisé en ce que** la fréquence du deuxième signal d'horloge (112) est un multiple ou un sous-multiple de la fréquence du premier signal d'horloge (102).

3. Procédé selon l'une des revendications précédentes, **caractérisé en ce que** l'unité d'émission (120) est réalisée sous la forme d'une unité d'émission/réception.

4. Procédé selon l'une des revendications précédentes, **caractérisé en ce que** l'unité de commande (110) est réalisée sous la forme d'un microcontrôleur.

5. Procédé selon l'une des revendications précédentes, **caractérisé en ce qu'**un oscillateur (Y1), notamment un oscillateur à quartz, est utilisé pour le générateur d'horloge (100).

6. Procédé selon l'une des revendications précédentes, **caractérisé en ce que** le signal de commande d'horloge (111) est généré par un convertisseur numérique/analogique (115).

7. Procédé selon l'une des revendications précédentes, **caractérisé en ce qu'**au moins une diode varactor (D8, D9) est utilisée pour la modulation en fréquence du premier signal d'horloge (102) pour le générateur d'horloge (100).
